# EUROPEAN PATENT APPLICATION

(11) **EP 4 803 553 A1**
(43) Date of publication of application: **09.09.2026**
(21) Application number: 24885847.4
(22) Date of filing: 31.10.2024
(51) Int. Cl.: C08F 16/06, C08F 8/12, C08F 210/02, C08F 216/04, C08F 216/06

(54) **MODIFIED ETHYLENE-VINYL ALCOHOL COPOLYMER, GAS BARRIER MATERIAL, FILM OR SHEET, MULTILAYER STRUCTURE, PACKAGING CONTAINER, AND METHOD FOR PRODUCING MODIFIED ETHYLENE-VINYL ALCOHOL COPOLYMER**

(30) Priority: 01.11.2023 JP 2023187629
(71) Applicant: Mitsubishi Chemical Corporation, Tokyo 100-8251 (JP)
(72) Inventor: YANO, Tomotake, Tokyo 100-8251 (JP); KONISHI, Atsuko, Tokyo 100-8251 (JP); YOSHIOKA, Risa, Tokyo 100-8251 (JP); NAKAI, Yoshihiro, Tokyo 100-8251 (JP); MIZUTANI, Yuta, Tokyo 100-8251 (JP); KAWASHIMA, Takuya, Tokyo 100-8251 (JP); KOBAYASHI, Ryo, Tokyo 100-8251 (JP)
(74) Representative: Hoffmann Eitle
(86) International application number: PCT/JP2024/038952
(87) International publication number: WO 2025/095081

(57) **Abstract**

To provide as a modified ethylene-vinyl alcohol copolymer achieving both forming processability and gas barrier properties under high humidity, the modified ethylene-vinyl alcohol copolymer having a content of an ethylene structural unit of from 20 to 60 mol%, and having a structural unit (1) described below: 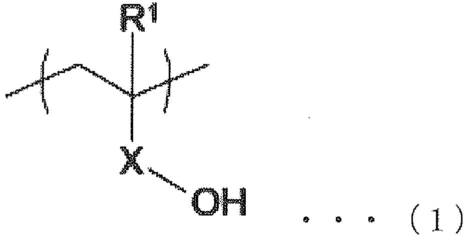 wherein in the structural unit (1), R¹ is an alkyl group having from one to three carbons; and X is an alkylene group having from one to five carbons.

## Description

### Technical Field

The present disclosure relates to a modified ethylene-vinyl alcohol copolymer, a gas barrier material, a film or sheet, a multilayer structure, a packaging container, and a method for producing a modified ethylene-vinyl alcohol copolymer.

### Background Art

An ethylene-vinyl alcohol copolymer (hereinafter may be referred to as "EVOH") is a melt-moldable gas barrier resin and has been widely used especially as a food packaging material. Since an EVOH is a crystalline resin, it needs to be handled at a temperature equal to or higher than the melting point during forming.

However, the forming processing temperature and the thermal decomposition temperature of the vinyl alcohol resin are close to each other, and thus there is a problem of burning or gelling of the resin occurring during extended forming processing. It is also known that during film formation, crystals grow in the resin due to stretching, thereby reducing formability and transparency. Therefore, a gas barrier resin having a low melting point and an excellent forming processability has been desired.

Accordingly, a method for copolymerizing a monomer of a third component in addition to vinyl acetate and ethylene has generally been proposed as a method for lowering the melting point of an EVOH. For example, Patent Literature 1 discloses that the use of an EVOH having an allyl-modified group for a barrier layer of a multilayer film improves gas barrier properties under high humidity while improving formability.

### Related Art Document

### Patent Literature

Patent Literature 1: JP 62-46643 A

### Summary

### Technical Problem

In the technique disclosed in Patent Literature 1, as the degree of modification of the allyl-modified group increases, the gas barrier properties under high humidity significantly decrease, and there is room for improvement in achieving both forming processability and gas barrier properties under high humidity.

Therefore, under such a background, the present disclosure provides a modified EVOH that achieves both forming processability and gas barrier properties under high humidity.

### Solution to Problem

Thus, as a result of intensive studies in view of such circumstances, the present inventors have found that when an EVOH has a specific content of ethylene structural unit and has the following structural unit (1) as a monomer of a third component, the EVOH can have a low melting point and excellent forming processability, and even when the degree of modification of the monomer of the third component is increased, the EVOH can have excellent gas barrier properties under high humidity.

That is, the present disclosure has the following aspects.
[1] A modified ethylene-vinyl alcohol copolymer having a content of an ethylene structural unit of from 20 to 60 mol%, and having a structural unit (1) described below: 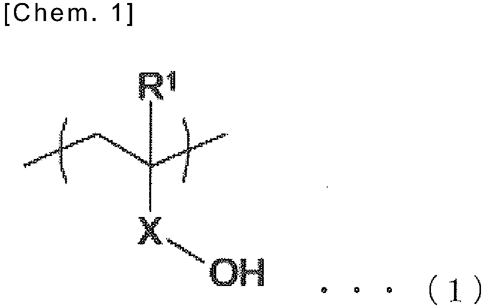 wherein in the structural unit (1), R¹ is an alkyl group having from one to three carbons; and X is an alkylene group having from one to five carbons.
[2] The modified ethylene-vinyl alcohol copolymer according to [1], wherein a degree of modification of the structural unit (1) is from 0.5 to 10 mol%.
[3] The modified ethylene-vinyl alcohol copolymer according to [1] or [2], wherein the modified ethylene-vinyl alcohol copolymer is water-insoluble.
[4] The modified ethylene-vinyl alcohol copolymer according to any of [1] to [3], wherein a monolayer film formed of the modified ethylene-vinyl alcohol copolymer and having a film thickness of from 200 to 300 µm has a saturated water absorption of less than 15 mass% at 20°C and 90% RH.
[5] A gas barrier material having a layer containing the modified ethylene-vinyl alcohol copolymer according to any of [1] to [4].
[6] A film or sheet containing the gas barrier material according to [5].
[7] A multilayer structure containing the gas barrier material according to [5].
[8] A packaging container containing the gas barrier material according to [5].
[9] A method for producing the modified ethylene-vinyl alcohol copolymer according to any one of [1] to [4], the method including:
   copolymerizing ethylene, a vinyl ester monomer, and a compound having a structural unit (2) described below to produce a modified ethylene-vinyl ester copolymer; and
   saponifying the produced modified ethylene-vinyl ester copolymer: 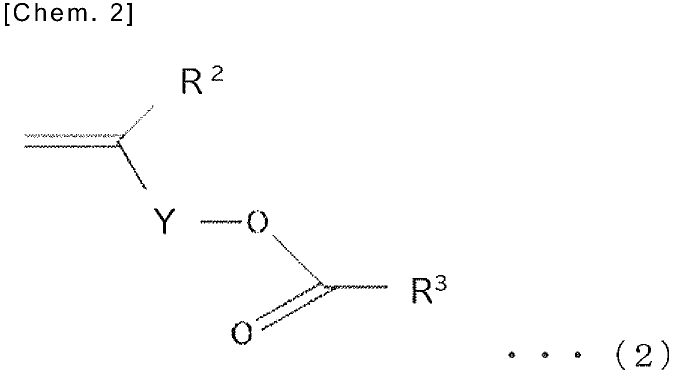
   wherein in the structural unit (2), R² is an alkyl group having from one to three carbons; R³ is an alkyl group having from one to 10 carbons; and Y is an alkylene group having from one to five carbons.

### Advantageous Effects of Disclosure

The modified EVOH of the present disclosure has an excellent forming processability and gas barrier properties under high humidity.

### Description of Embodiments

The present disclosure is described below with reference to embodiments for carrying out the present disclosure. However, the present disclosure is not limited to the embodiments described below.

In the present specification, the expression "x and/or y (with x and y being any configurations)" means at least one of x or y and includes the three meanings of only x, only y, and both x and y.

Unless otherwise specified, the expression "from X to Y" (with X and Y being any numbers) includes the meaning of "X or more and Y or less" as well as the meaning of "preferably more than X" or "preferably less than Y".

The expression "X or more" (with X being any number) or "Y or less" (with Y being any number) includes the meaning of "preferably more than X" or "preferably less than Y".

In the present specification, the term "film" includes the meaning of "tape" and "sheet".

In the present specification, with respect to a numerical range described stepwise, the upper limit or the lower limit of the numerical range at one step can be optionally combined with the upper limit or the lower limit of the numerical range at another step. In addition, in a numerical range described in the present specification, the upper limit or the lower limit of the numerical range can be replaced with a value presented in examples.

The modified EVOH according to one embodiment of the present disclosure (hereinafter may be referred to as "the present modified EVOH") has the following structural unit (1) in the EVOH having an ethylene structural unit of from 20 to 60 mol%.

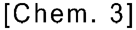

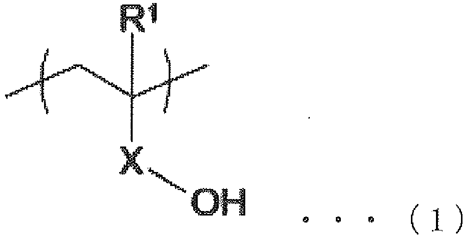

In the structural unit (1), R¹ is an alkyl group having from one to three carbons, and X is an alkylene group having from one to five carbons.

The method for producing the present modified EVOH is described below.

The present modified EVOH is a water-insoluble thermoplastic resin that is usually obtained by copolymerizing ethylene, a vinyl ester monomer, and an unsaturated monomer that can be converted to a structural unit (1), and then saponifying the obtained copolymer, which is a modified ethylene-vinyl ester copolymer.

The present modified EVOH is particularly used as a material for food packaging and therefore is required not to elute in cold and hot water environments. That is, a water-insoluble thermoplastic resin specifically means that the elution amount is 3.0 mass% or less, preferably 1 mass% or less, more preferably 0.5 mass% or less, when immersed in the hot water environment at 95°C or less.

Examples of the vinyl ester monomer used in the present modified EVOH include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, vinyl versatate, and vinyl trifluoroacetate. These may be used singly or in combinations of two or more types thereof. Among these, vinyl acetate is preferable from an economical viewpoint.

Examples of the unsaturated monomer that can be converted to the structural unit (1) used in the present modified EVOH include a compound having the following structural unit (2).

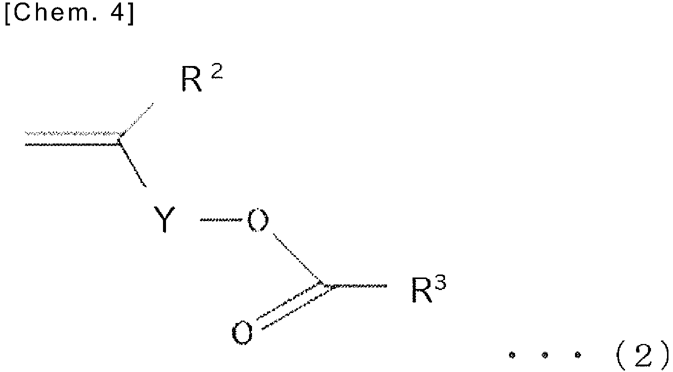

In the structural unit (2), R² is an alkyl group having from one to three carbons; R³ represents an alkyl group having from one to 10 carbons; and Y represents an alkylene group having from one to five carbons.

In the structural unit (2), R² represents an alkyl group having from one to 10 carbons. The structure of R² is not particularly limited, but it may have a branched structure or a cyclic structure. In terms of the functional group, some of hydrogen atoms in the alkyl group may be substituted with another functional group. Examples of the functional group include an alkoxy group, a halogen atom, and a hydroxyl group. R² is preferably an alkyl group having from one to five carbons, and suitable examples thereof include linear or branched alkyl groups such as a methyl group, an ethyl group, an n-propyl group, an isopropyl group, an n-butyl group, an isobutyl group, a t-butyl group, and a pentyl group.

Specific examples of the unsaturated monomer represented by the structural unit (2) include 2-methyl-2-propenyl acetate, 2-ethyl-2-propenyl acetate, 3-methyl-3-butenyl acetate, 3-ethyl-3-butenyl acetate, 4-methyl-4-pentenyl acetate, 5-methyl-5-hexenyl acetate, and 6-methyl-6-heptenyl acetate. Among these, 2-methyl-2-propenyl acetate or 3-methyl-3-butenyl acetate is preferably used from the viewpoint of cost and ease of production.

The polymerization method for copolymerizing ethylene, the vinyl ester monomer, and the compound having the structural unit (2) may be any of, for example, batch polymerization, semi-batch polymerization, continuous polymerization, and semi-continuous polymerization. As a polymerization method, for example, a known method such as bulk polymerization, solution polymerization, suspension polymerization, or emulsion polymerization can be applied. Among these, bulk polymerization is suitably used for the purpose of controlling the molecular weight distribution and simplifying the production process.

When the copolymerization is to be carried out by solution polymerization, examples of the solvent to be used include lower alcohols having from one to five carbons, such as methanol, ethanol, 1-propanol, 2-propanol, 1-butanol, and 2-methyl-2-propanol; ketones such as acetone and 2-butanone; and carbonate esters such as dimethyl carbonate and diethyl carbonate. These may be used singly or in combinations of two or more types thereof. Among these, methanol is suitably used from the viewpoint of easy control of the polymerization reaction. In the case of synthesizing a copolymer having a low degree of polymerization, 2-propanol is suitably used.

The amount of the solvent used can be appropriately selected by considering the degree of polymerization of the target modified EVOH and the chain transfer constant of the solvent. When the solvent is methanol or 2-propanol, S (solvent)/M (monomer) is preferably from 0.01 to 10 (mass ratio), more preferably from 0.05 to 7 (mass ratio).

As a method for feeding the copolymerization components in the solution polymerization, any method such as an initial batch feeding, a divided feeding, or a continuous feeding can be employed. In view of the simplicity of the operation, particularly the initial batch feeding is suitably used.

A polymerization initiator is used in the copolymerization. Examples of the polymerization initiator include azo-based initiators such as 2,2'-azobis(isobutyronitrile), 2,2'-azobis(2,4-dimethylvaleronitrile), and 2,2'-azobis(4-methoxy-2,4-dimethylvaleronitrile); and peroxide-based initiators such as acetyl peroxide, benzoyl peroxide, lauryl peroxide, t-butyl peroxyneodecanoate, 1,1,3,3,-tetramethylbutyl peroxyneodecanoate, diisopropyl peroxydicarbonate, and di-2-ethylhexyl peroxydicarbonate. These may be used singly or in combinations of two or more types thereof.

It is hard to generalize the amount of the polymerization initiator to be used as it depends on the type of the initiator, but the amount thereof is optionally selected according to the rate of polymerization. For example, when 2,2'-azobis(isobutyronitrile) or t-butyl peroxyneodecanoate is used, the amount thereof is usually from 0.0001 to 0.10 parts by mass, preferably from 0.001 to 0.05 parts by mass, per 100 parts by mass of the vinyl ester monomer.

It is hard to generalize the reaction temperature of the copolymerization reaction as it depends on the polymerization solvent to be used and the pressure, but usually the reaction temperature is preferably from 40 to 80°C, particularly preferably from 55 to 80°C. When the temperature is too low, it takes longer time to polymerize, and when the polymerization time is intended to be shortened, a large amount of the initiator tends to be required. On the contrary, when the temperature is too high, the rate of polymerization becomes fast, and it tends to become harder to control the polymerization.

As a method for introducing ethylene into the copolymer, a normal pressure polymerization with ethylene may be performed. The introduction amount thereof can be controlled by the ethylene pressure. It is hard to generalize the ethylene pressure as it depends on the intended content of the ethylene structural unit, but the pressure thereof is usually selected from a range of from 2.0 to 8.0 MPa.

In the case of the batch type, the time required for polymerization is usually from four to 10 hours, more preferably from six to nine hours. When the time required for polymerization is too short, there is a tendency of requiring a higher polymerization temperature or a higher amount of the initiator. On the contrary, when the time required for polymerization is too long, there is a problem in productivity, which is not preferable. In the case of the continuous type, the mean residence time in the polymerization reactor is usually from two to eight hours, more preferably from two to six hours. When the residence time is too short, the polymerization temperature needs to be increased, or the amount of catalyst needs to be increased. On the contrary, when the residence time is too long, there is a problem in productivity, which is not preferable.

In addition, the copolymerization may be performed under the presence of a chain transfer agent to the extent such that the effects of the present disclosure are not impaired. Examples of the chain transfer agent include aldehydes such as acetaldehyde, propionaldehyde, and crotonaldehyde; and mercaptans such as 2-hydroxyethanethiol. These may be used singly or in combinations of two or more types thereof. Among these, aldehydes are suitably used. The amount of the chain transfer agent added during copolymerization is determined depending on the chain transfer constant of the chain transfer agent and the intended degree of polymerization of the EVOH, but generally the amount thereof is preferably from 0.1 to 10 parts by mass per 100 parts by mass of the vinyl ester monomer.

After the copolymerization of the copolymerization components, addition of a conjugated polyene such as sorbic acid as a polymerization inhibitor is also preferable in order to reliably terminate the reaction.

Thus, a modified ethylene-vinyl ester copolymer is obtained, and the present modified EVOH can be produced by saponifying the modified ethylene-vinyl ester copolymer.

The saponification method can employ a known method and is performed, for example, in a state where the modified ethylene-vinyl ester copolymer obtained above is dissolved in an alcohol or a hydrous alcohol and by using a saponification catalyst.

Examples of the alcohol include lower alcohols having from one to five carbons, such as methanol, ethanol, and propanol. These may be used singly or in combinations of two or more types thereof. Among these, methanol is preferable.

The concentration of the modified ethylene-vinyl ester copolymer in the alcohol is appropriately selected depending on the viscosity and is usually from 5 to 60 mass%.

Examples of the saponification catalyst include alkali catalysts such as hydroxides and alcoholates of alkali metals, such as sodium hydroxide, potassium hydroxide, sodium methylate, sodium ethylate, potassium methylate, and potassium ethylate; and acid catalysts such as sulfuric acid, hydrochloric acid, nitric acid, methanesulfonic acid, zeolite, and cation exchange resins.

The temperature at which the saponification is performed is not limited, but the temperature thereof is preferably from 20 to 140°C. A particulate matter is formed as the saponification progresses, indicating that the reaction has progressed. At this time, when a gel-like product is precipitated, the product may be pulverized. The resulting granular product can be washed, dried, neutralized, and desalted to produce a modified EVOH.

The modified EVOH thus produced is mainly composed of an ethylene structural unit, a vinyl alcohol unit, and a structural unit (1), and contains a small amount of a vinyl ester structural unit that has remained without being saponified when the saponification degree is less than 100 mol%.

The present modified EVOH may further contain an additional monomer unit other than the structural units (1) and (2), the vinyl alcohol unit and the vinyl ester unit, and the ethylene unit, to the extent such that the effects of the present disclosure are not impaired. The additional monomer unit is a monomer unit derived from an ethylenically unsaturated monomer that is copolymerizable with the vinyl ester. Examples of the ethylenically unsaturated monomer unit include α-olefins such as propylene, n-butene, isobutylene, and 1-hexene; acrylic acids and salts thereof; unsaturated monomers having an acrylate group; methacrylic acid and salts thereof; unsaturated monomers having a methacrylate group; acrylamide, N-methylacrylamide, N-ethylacrylamide, N,N-dimethylacrylamide, diacetoneacrylamide, acrylamidopropanesulfonic acid and salts thereof, acrylamidopropyldimethylamine and salts thereof (e.g., quaternary salts); methacrylamide, N-methylmethacrylamide, N-ethylmethacrylamide, methacrylamidopropanesulfonic acid and salts thereof, methacrylamidopropyldimethylamine and salts thereof (e.g., quaternary salts); vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether, and 2,3-diacetoxy-1-vinyloxypropane; vinyl cyanides such as acrylonitrile and methacrylonitrile; vinyl halides such as vinyl chloride and vinyl fluoride; vinylidene halides such as vinylidene chloride and vinylidene fluoride; allyl compounds such as allyl acetate, 2,3-diacetoxy-1-allyloxypropane, and allyl chloride; unsaturated dicarboxylic acids such as maleic acid, itaconic acid, and fumaric acid and salts or esters thereof; vinylsilyl compounds such as vinyltrimethoxysilane; and isopropenyl acetate. In addition, a structure derived from the unsaturated monomer unit represented by the structural unit (2) that has not been saponified is also included in the additional monomer unit. The content of the additional monomer unit is preferably 10 mol% or less, more preferably 5 mol% or less.

The order of array of the structural unit (1), the vinyl alcohol unit, the vinyl ester unit, the ethylene structural unit, and the additional monomer unit in the present modified EVOH is not particularly limited and may be any of random, block, alternating, and the like.

The present modified EVOH may further be blended with an additive such as a filler, a processing stabilizer such as a copper compound, a weather-resistant stabilizer, a colorant, a UV absorber, a light stabilizer, an antioxidant, an antistatic agent, a flame retardant, a plasticizer, an additional thermoplastic resin, a lubricant, a perfume, a defoaming agent, a deodorant, a bulking agent, a release agent, a mold release agent, a reinforcing agent, a crosslinking agent, a fungicide, an antiseptic, or a crystallization retarder, as necessary.

The degree of modification of the structural unit (1) in the present modified EVOH is usually from 0.1 to 10 mol%, preferably from 0.5 to 9 mol%, more preferably from 1 to 8 mol%, even more preferably from 2 to 6 mol%. When the degree of modification is too low, the molding processability tends to decrease, whereas when the degree of modification is too high, the gas barrier properties tend to deteriorate.

The degree of modification of the structural unit (1) can be calculated by, for example, the method described in examples below.

The saponification degree in the present modified EVOH is usually 95 mol% or more, preferably 98.5 mol% or more, more preferably 99 mol% or more. When the saponification degree is too low, the gas barrier properties, aroma retaining ability, solvent resistance, and oil resistance tend to decrease. The upper limit for the saponification degree is 100 mol%.

The present modified EVOH has a content of the ethylene structural unit of from 20 to 60 mol%, preferably from 25 to 50 mol%, more preferably from 25 to 45 mol%. When the content of the ethylene structural unit is too low, the gas barrier properties under high humidity tend to decrease, whereas when the content thereof is too high, the molecular weight tends to decrease, or the mechanical strength at the time of molding tends to decrease. The content of the ethylene structural unit in the present modified EVOH can be controlled by adjusting the ethylene pressure at the time of copolymerization.

The saponification degree and the content of the ethylene structural unit can be calculated by, for example, the method described in examples below.

The present modified EVOH has a melt flow rate (MFR) [at 210°C and a load of 2160 g] of usually from 1 to 100 g/10 minutes, preferably from 1 to 50 g/10 minutes, more preferably from 3 to 35 g/10 minutes. When the MFR is too high, processing defects tend to occur at the time of extrusion, whereas when the MFR is too low, flowability defects tend to occur at the time of molding processing.

In the present specification, a semi-automated melt flow rate tester (available from Toyo Seiki Seisaku-sho, Ltd.) is used to measure the MFR by measuring a flow rate of a sample passing through an orifice having a length of 8 mm and a diameter of 2.095 mm at a temperature of 210°C and a load of 2160 g.

The present modified EVOH has a melting point of usually from 100 to 200°C, preferably from 100 to 190°C, more preferably from 100 to 180°C. When the melting point is too high, the forming processability tends to be deteriorated, whereas when the melting point is too low, the mechanical strength of the resultant molded product tends to deteriorate.

The present modified EVOH has a glass transition temperature (Tg) of usually from 50 to 70°C, preferably from 50 to 65°C, more preferably 55 to 65°C. When the glass transition temperature is too high, the molding processability tends to decrease, whereas when it is too low, the gas barrier properties under high humidity tend to decrease.

The melting point and the glass transition temperature can be calculated by a method described in examples below using a differential scanning calorimeter (DSC).

The present modified EVOH can be blended with an additional component to form a resin composition. Examples of the additional component include an additional thermoplastic resin, a plasticizer, a lubricant, a stabilizer, a surfactant, a colorant, a UV absorber, an antistatic agent, a drying agent, a crosslinking agent, a metal salt, a filler, and various fibers. These may be used alone or in combination of two or more types.

The content of the present modified EVOH in the resin composition is usually 80 mass% or more, preferably 90 mass% or more, more preferably 95 mass% or more. The upper limit is 100 mass%.

The modified EVOH can be formed into a film and suitably used as a gas barrier material such as a food packaging material.

The method for producing a gas barrier material from the modified EVOH is not particularly limited, and examples thereof include (i) a method in which a solution of the modified EVOH is applied to a film of a substrate resin and dried to form a layer composed of the modified EVOH (hereinafter referred to as "EVOH layer") to produce a gas barrier material; and (ii) a method in which the modified EVOH is melt-molded to form a modified EVOH layer to produce a gas barrier material.

In the method (i), examples of the solvent used for the modified EVOH solution include water and lower alcohols having from one to five carbons, such as methanol, ethanol, 1-propanol, 2-propanol, 1-butanol, and 2-butanol. These may be used singly or in combinations of two or more types thereof. Among these, a mixed solvent of water and 1-propanol is preferable.

The solid content concentration in the modified EVOH solution is usually from 0.5 to 30 mass%, preferably from 5 to 20 mass%.

Examples of the method for coating the modified EVOH solution include a known method such as a bar coater, roll coating, die coating, gravure coating, comma coating, and screen printing. Among these, a bar coater is preferable.

A gas barrier material made of the modified EVOH can be produced by drying through a heat treatment or the like after coating. The heat treatment is preferably performed at, for example, from 60 to 105°C for from 0.5 to 10 minutes.

Thus, a film having the present modified EVOH layer is produced. The film may be a gas barrier material having a monolayer structure or a gas barrier material having a multilayer structure, but the multilayer structure is preferable. The gas barrier material having the multilayer structure preferably has at least one layer of the modified EVOH. The gas barrier material having the multilayer structure may be laminated with the modified EVOH layer or may be laminated with an additional substrate resin.

Examples of the substrate resin include polyethylene-based resins such as linear low-density polyethylene, low-density polyethylene, ultra-low-density polyethylene, medium-density polyethylene, high-density polyethylene, ethylene-propylene (block and random) copolymers, and ethylene-α-olefin (α-olefin having from four to 20 carbons) copolymers; polypropylene-based resins such as polypropylene and propylene-α-olefin (α-olefin having from four to 20 carbons) copolymers; polyolefin-based resins in a broad sense including (unmodified) polyolefin-based resins such as polybutene, polypentene, and polycyclic olefin-based resins (polymers having a cyclic olefin structure in at least one of the main chain and a side chain), and modified olefin-based resins such as unsaturated carboxylic acid-modified polyolefin-based resins in which any of these polyolefins is graft-modified with an unsaturated carboxylic acid or an ester thereof; ionomers; ethylene-vinyl acetate copolymers; ethylene-acrylic acid copolymers; ethylene-acrylate copolymers; polyester-based resins; polyamide-based resins (including copolymerized polyamide); polyvinyl chloride; polyvinylidene chloride; acrylic-based resins; polystyrene; vinyl ester-based resins; polyester-based elastomers; polyurethane-based elastomers; polystyrene-based elastomers; halogenated polyolefins such as chlorinated polyethylene and chlorinated polypropylene; and aromatic or aliphatic polyketones. These may be used singly or in combinations of two or more types thereof. In order to produce a gas barrier material having a substrate provided with biodegradability, a biodegradable resin may be used. Such a substrate resin may be subjected to a surface treatment such as a corona treatment.

The terms "linear low-density polyethylene", "low-density polyethylene", "ultra-low-density polyethylene", "medium-density polyethylene", and "high-density polyethylene" are commonly used to represent the types of polyethylene, respectively.

The multilayer structure may be subjected to a stretching treatment (with heating) as necessary. The stretching treatment may be either uniaxial stretching or biaxial stretching. In the case of biaxial stretching, simultaneous stretching or sequential stretching may be performed. A stretching method with a high stretch ratio can be also employed among a roll stretching method, a tenter stretching method, a tubular stretching method, a stretch blowing method, and vacuum-pressure forming. The stretching temperature is a temperature near the melting point of the multilayer structure and is selected from a range of usually from about 40 to 170°C, preferably from about 60 to 160°C. When the stretching temperature is too low, the stretchability deteriorates, whereas when the stretching temperature is too high, it becomes harder to maintain a stable stretched state.

Thermal setting may be carried out after the stretching treatment for the purpose of imparting dimensional stability. The thermal setting can be carried out by known means, and for example, the stretched film is subjected to a heat treatment at a temperature of usually from 80 to 180°C, preferably from 100 to 165°C, for an approximate time of usually from 2 to 600 seconds while the stretched film is kept in tension. When the multilayer stretched film produced from the present resin composition is used as a shrink film, the thermal setting is not carried out, and for example, a treatment such as cooling and setting by blowing cold air onto the stretched film may be carried out in order to impart heat-shrink property.

In some cases, the multilayer structure can be used to produce a cup or a tray-shaped multilayer container (packaging container). In such a case, a draw forming method is usually employed, and specific examples thereof include a vacuum forming method, a pressure forming method, a vacuum-pressure forming method, and a plug-assisted vacuum-pressure forming method. Furthermore, in the case of producing a tube- or bottle-form multilayer container (laminated structure) from a multilayer parison (a hollow tubular preform before blowing), a blow molding method is employed.

It is hard to generalize the thickness of the multilayer structure and further the thicknesses of the modified EVOH layer and the substrate resin layer forming the multilayer structure, as these depend on the layer configuration, the type of the substrate resin, the type of the adhesive resin, the application, the packaging form, the required physical properties, and the like. However, the thickness of the multilayer structure is usually from 10 to 5000 µm, preferably from 30 to 3000 µm, and particularly preferably from 50 to 2000 µm. The thickness of the layer formed of the modified EVOH is usually from 1 to 200 µm, preferably from 1 to 100 µm, particularly preferably from 1 to 50 µm; and the thickness of the substrate resin layer is usually from 5 to 3000 µm, preferably from 10 to 2000 µm, particularly preferably from 20 to 1000 µm.

A monolayer film formed of the present modified EVOH and having a film thickness of from 200 to 300 µm has a saturated water absorption of usually less than 15 mass%, preferably less than 13 mass%, more preferably less than 12 mass%, at 20°C and 90% RH. When the saturated water absorption of the monolayer film is too high, the resin tends to expand causing structural deformation or peeling from the substrate of the multilayer structure. When the saturated water absorption is too low, the laminated film tends to become brittle, for example, cracked when bent.

The saturated water absorption of the monolayer film can be calculated by, for example, the method described in examples below.

The present modified EVOH layer has an oxygen permeability of preferably 20 cc.20 µm/(m²·day·atm) or less, more preferably 15 cc.20 µm/(m²·day·atm) or less, particularly preferably 14 cc.20 µm /(m²·day·atm) or less, under the environment of 20°C and 90% RH.

The oxygen permeability can be calculated by the method described in examples below using an oxygen permeability measuring device.

### Examples

The present disclosure will be described more specifically with reference to Examples below, but the present disclosure is not limited to the Examples below to the extent such that the essence of the present disclosure is not exceeded.

In the Examples, "parts" and "%" are based on mass.

### Example 1

### Synthesis of Modified EVOH

Into an induction stirring autoclave under a nitrogen atmosphere, 828 parts of vinyl acetate, 21.9 parts of 2-methyl-2-propenyl acetate, and 0.3 parts of azobis(isobutyronitrile) as a polymerization initiator (0.0357 parts per 100 parts of the feeding vinyl acetate monomer) were added. After replacing the inside of the induction stirring autoclave with ethylene, the temperature of the reaction liquid was increased to 67°C with stirring. Thereafter, the autoclave pressure was increased with ethylene so that the pressure gauge of the autoclave was 4 MPa, and then polymerization was initiated. After stirring for four hours, a solution prepared by dissolving one part of sorbic acid in 100 parts of methanol was added, and the mixture was cooled to room temperature (23°C) to terminate the polymerization. After taking out the reaction liquid, the volatile components were distilled off by drying under reduced pressure to produce a modified ethylene-vinyl acetate copolymer.

Subsequently, a methanol solution of sodium hydroxide was added to a methanol solution containing 20% of the resultant modified ethylene-vinyl acetate copolymer, and saponification was performed by heating and refluxing the mixture with stirring. The crude modified EVOH was taken out from the resultant polymer solution and was then neutralized and desalted to produce a target modified EVOH.

### Production of Monolayer Film of Modified EVOH

The modified EVOH produced above was formed into a monolayer film by hot pressing at a heating temperature of 210°C so as to have a designed film thickness of from about 200 to 300 µm.

### Production of Laminated Film of Modified EVOH

Into 45 parts of a mixed solvent of water/1-propanol at 1/1 (volume ratio) was added 5 parts of the modified EVOH produced above, and the mixture was heated and stirred at 70°C for two hours to completely dissolve the modified EVOH. The solution was left to cool to 55°C to prepare a resin composition of the modified EVOH (coating liquid). The prepared coating liquid was applied to a corona-treated PET substrate having a thickness of 12 µm using a wire bar #24 and dried at 80°C for five minutes. This process was repeated twice to produce a laminated film in which a modified EVOH film layer having a thickness of 6 µm was laminated on the PET substrate.

### Example 2

A modified EVOH was produced in the same manner as in Example 1, except that the amount of 2-methyl-2-propenyl acetate used in Example 1 was changed to 54.9 parts, and the amount of azobis(isobutyronitrile) added as a polymerization initiator was changed to 0.0535 parts per 100 parts of the feeding vinyl acetate monomer.

In addition, a monolayer film and a laminated film were produced in the same manner as in Example 1 using the modified EVOH produced in Example 2.

### Example 3

A modified EVOH was produced in the same manner as in Example 1, except that the amount of 2-methyl-2-propenyl acetate used in Example 1 was changed to 109.8 parts, and the amount of azobis(isobutyronitrile) added as a polymerization initiator was changed to 0.0535 parts per 100 parts of the feeding vinyl acetate monomer.

In addition, a monolayer film was produced in the same manner as in Example 1 using the modified EVOH produced in Example 3.

Into 27 parts of the mixed solvent was added three parts of the modified EVOH produced in Example 3, and the mixture was heated and stirred at 87°C for one hour to completely dissolve the modified EVOH to prepare a resin composition of the modified EVOH. Using the composition, a laminated film was produced in the same manner as in Example 1.

### Example 4

A modified EVOH was produced in the same manner as in Example 1, except that the amount of vinyl acetate used in Example 1 was changed to 460 parts, and 2-methyl-2-propenyl acetate was changed to 13.7 parts of 3-methyl-3-butenyl acetate.

In addition, a monolayer film and a laminated film were produced in the same manner as in Example 1 using the modified EVOH produced in Example 4.

### Example 5

A modified EVOH was produced in the same manner as in Example 1, except that the amount of 3-methyl-3-butenyl acetate used in Example 4 was changed to 34.2 parts, and the amount of azobis(isobutyronitrile) added as a polymerization initiator was changed to 0.0714 parts per 100 parts of the feeding vinyl acetate monomer.

In addition, a monolayer film and a laminated film were produced in the same manner as in Example 1 using the modified EVOH produced in Example 5.

### Example 6

A modified EVOH was produced in the same manner as in Example 1, except that the amount of 3-methyl-3-butenyl acetate used in Example 4 was changed to 54.8 parts, and the amount of azobis(isobutyronitrile) added as a polymerization initiator was changed to 0.1071 parts per 100 parts of the feeding vinyl acetate monomer.

In addition, a monolayer film and a laminated film were produced in the same manner as in Example 1 using the modified EVOH produced in Example 6.

### Comparative Example 1

To an induction stirring autoclave under a nitrogen atmosphere, 460 parts of vinyl acetate and 9.3 parts of allyl acetate were added, and 10 parts of a methanol solution prepared by dissolving 0.08 parts (0.0178 parts per 100 parts of the feeding vinyl acetate monomer) of azobis(isobutyronitrile) as a polymerization initiator was then added to an inner tube attached to the autoclave. After replacing the inside of the induction stirring autoclave with ethylene, the entire volume of azobis(isobutyronitrile) was introduced by pressure injection from the attached inner tube, and the temperature was increased to 67°C while the reaction liquid is stirred. Thereafter, the autoclave pressure was increased with ethylene so that the pressure gauge of the autoclave was 4 MPa, and then polymerization was initiated. After stirring for four hours, a solution prepared by dissolving one part of sorbic acid in 100 parts of methanol was added, and the mixture was cooled to room temperature (23°C) to terminate the polymerization. After taking out the reaction liquid, the volatile components were distilled off by drying under reduced pressure to produce a modified ethylene-vinyl acetate copolymer.

Subsequently, a methanol solution of sodium hydroxide was added to a methanol solution containing 20% of the resultant modified ethylene-vinyl acetate copolymer, and saponification was performed by heating and refluxing the mixture with stirring. The crude modified EVOH was taken out from the resultant polymer solution and was then neutralized and desalted to produce a target modified EVOH.

Then, a monolayer film and a laminated film were produced in the same manner as in Example 1 using the modified EVOH produced in Comparative Example 1.

### Comparative Example 2

A modified EVOH was produced in the same manner as in Comparative Example 1, except that the amount of vinyl acetate used in Comparative Example 1 was changed to 828 parts, and the amount of allyl acetate was changed to 50.4 parts.

In addition, a monolayer film and a laminated film were produced in the same manner as in Example 1 using the modified EVOH produced in Comparative Example 2.

### Comparative Example 3

A modified EVOH was produced in the same manner as in Comparative Example 1, except that the amount of allyl acetate used in Comparative Example 1 was changed to 103.8 parts, and the amount of azobis(isobutyronitrile) as a polymerization initiator was changed to 0.0535 parts per 100 parts of the feeding vinyl acetate monomer.

In addition, a monolayer film and a laminated film were produced in the same manner as in Example 1 using the modified EVOH produced in Comparative Example 3.

### Comparative Example 4

A modified EVOH was produced in the same manner as in Comparative Example 1, except that 12.2 parts of 3-butenyl acetate were used instead of allyl acetate in Comparative Example 1, and azobis(isobutyronitrile) as a polymerization initiator was used in an amount of 0.0357 parts per 100 parts of the feeding vinyl acetate monomer.

In addition, a monolayer film and a laminated film were produced in the same manner as in Example 1 using the modified EVOH produced in Comparative Example 4.

### Comparative Example 5

A modified EVOH was produced in the same manner as in Comparative Example 1, except that the amount of 3-butenyl acetate used in Comparative Example 4 was changed to 30.5 parts, and the amount of azobis(isobutyronitrile) as a polymerization initiator was changed to 0.0714 parts per 100 parts of the feeding vinyl acetate monomer.

In addition, a monolayer film and a laminated film were produced in the same manner as in Example 1 using the modified EVOH produced in Comparative Example 5.

### Reference Example

As an unmodified EVOH, ethylene-vinyl alcohol "Soarnol D2908" available from Mitsubishi Chemical Corporation was used.

In addition, a monolayer film and a laminated film were produced in the same manner as in Example 1 by using the unmodified EVOH.

The following measurement methods were performed to measure the degree of modification, the saponification degree, the content of the ethylene structural unit, the melting point, and the glass transition temperature when dried, of the produced EVOHs of Examples 1 to 6, Comparative Examples 1 to 5, and Reference Example.

In addition, the following measurement methods were performed to measure the saturated water absorption and the glass transition temperature when saturated with water, of the produced monolayer films of Examples 1 to 6, Comparative Examples 1 to 5, and Reference Example, and the oxygen permeability of the produced laminated films of Examples 1 to 6, Comparative Examples 1 to 5, and Reference Example. The results are shown in Table 1 below.

### Degree of modification of Structural Unit (1) in EVOH

The modified EVOH produced was dissolved in N,N-dimethylformamide, and then acetic anhydride and N-methylindazole were added thereto to react, thereby converting the hydroxyl groups of the EVOH into acetate groups to produce an ethylene-vinyl acetate copolymer. The produced ethylene-vinyl acetate copolymer was dissolved in deuterated chloroform, and ¹H-NMR was measured under the following measurement conditions to calculate the degree of modification of the structural unit (1).

### Measurement conditions

· Apparatus: Ascend-400 (available from Bruker Corporation) · Measurement temperature: 25°C
· Number of integrations: 16

### Saponification Degree of EVOH and Content of Ethylene Structural Unit

The modified EVOH produced and the unmodified EVOH were dissolved in deuterated DMSO, and the saponification degree and the content of ethylene structural units were calculated by measuring ¹H-NMR according to the following method.

### Measurement conditions

· Apparatus: Ascend-400 (available from Bruker Corporation) · Measurement temperature: 50°C
· Number of integrations: 16

### EVOH Melting Point and Glass Transition Temperature When Dried

The melting points and the glass transition temperatures of the modified EVOH produced and the unmodified EVOH were measured using a differential scanning calorimeter (DSC) under the following measurement conditions.

### Measurement conditions

· Apparatus: ThermoPlus EV02 (available from Rigaku Holdings Corporation)
· Temperature range: from -30 to 210°C
· Heating rate: 10°C/min
· Number of scans: 2 (the value obtained at the second temperature increase was taken as the melting point and the glass transition temperature)

### Saturated Water Absorption of Monolayer Film of EVOH

A predetermined mass (about 0.1 g) (W₁) of the monolayer film produced was accurately weighed in an aluminum cup and was left to stand in an environmental testing machine (set temperature: 20°C, relative humidity: 90% RH) to start a water absorption test. The mass of the monolayer film was measured at regular time intervals, and the timing at which the mass no longer changed was defined as a constant weight value (W₂). Thereafter, the saturated water absorption of the monolayer film was determined from the following equation (a).$Satured water absorption \left(mass%\right) = \left({W}_{2}-{W}_{1}\right) {/ W}_{1} \times 100$

### Glass Transition Temperature of Monolayer Film of EVOH When Saturated with Water

The glass transition temperature, when saturated with water, of the monolayer film of EVOH produced by the aforementioned method was measured by differential scanning calorimetry (DSC) under the following measurement conditions.
· Apparatus: DSC7000X (available from Hitachi High-Tech Science Corporation)
· Measurement method: Temperature modulation measurement in alternating current temperature control mode
· Applied frequency: 0.02 Hz
· Temperature amplitude: ± 3.0°C
· Temperature range: from -50 to 80°C
· Heating rate: 5°C/min
· Number of scans: 1 (a phase transition point measured from a specific heat component (reversing heat flow) in the measurement data was taken as a glass transition temperature)

### Oxygen Permeability of Laminated Film of EVOH

The oxygen permeability of the laminated film prepared by the aforementioned method was measured under the conditions of 20°C and 90% RH using an oxygen permeability measurement apparatus (OX-TRAN 2/21). Since uncoated PET film (12 µm) had an oxygen permeability of 90 cc/m²·day·atm, the oxygen permeability of the PET film was subtracted from the oxygen permeability actually measured, and the value was converted to a value according to the EVOH layer thickness of 20 µm (cc.20 µm/m²·day·atm). The smaller the value of the oxygen permeability, the better the gas barrier properties.

**[Table 1]**

| | Modified group | Degree of modification (mol%) | Saponification degree (mol%) | Content of ethylene structural unit (mol%) | Melting point (°C) | Glass transition temperature when dried (°C) | Oxygen permeability (90% RH and 20°C) (cc.20 µm/m₂·day·atm) | Saturated water absorption (90% RH and 20°C) (%) | Glass transition temperature when saturated with water (90% RH and 20°C) (°C) |
|---|---|---|---|---|---|---|---|---|---|
| Example 1 | 2-Methyl-2-propenyl acetate | 1.6 | 99.9 | 29.6 | 176.1 | 64.0 | 14 | 9.6 | 6.9 |
| Example 2 | 2-Methyl-2-propenyl acetate | 3.8 | 99.9 | 28.7 | 158.7 | 63.3 | 13 | 10.2 | 5.6 |
| Example 3 | 2-Methyl-2-propenyl acetate | 7.4 | 99.9 | 28.5 | 130.1 | 60.0 | 15 | 12.0 | 2.2 |
| Example 4 | 3-Methyl-3-butenyl acetate | 1.0 | 100 | 28.6 | 180.3 | 63.7 | 13 | 9.6 | 1.4 |
| Example 5 | 3-Methyl-3-butenyl acetate | 2.3 | 100 | 29.2 | 167.6 | 64.6 | 13 | 10.8 | 3.2 |
| Example 6 | 3-Methyl-3-butenyl acetate | 3.5 | 100 | 29.5 | 156.5 | 62.2 | 12 | 11.3 | 1.7 |
| Comparative Example 1 | Allyl acetate | 1.7 | 99.9 | 27.7 | 179.3 | 63.4 | 15 | 10.0 | 4.8 |
| Comparative Example 2 | Allyl acetate | 3.7 | 99.9 | 28.5 | 163.6 | 58.8 | 17 | 10.4 | 3.2 |
| Comparative Example 3 | Allyl acetate | 8.0 | 99.9 | 27.0 | 126.7 | 53.2 | 30 | 11.8 | -4.6 |
| Comparative Example 4 | 3-Butenyl acetate | 1.0 | 99.6 | 28.1 | 180.3 | 62.6 | 20 | 9.5 | 2.9 |
| Comparative Example 5 | 3-Butenyl acetate | 2.1 | 100 | 29.2 | 171.2 | 60.2 | 21 | 10.6 | 2.6 |
| Reference Example | None | None | 99.9 | 29.0 | 190.7 | 63.3 | 15 | 7.1 | 5.1 |

As shown in the results of Table 1, the modified EVOHs of Comparative Examples 1 to 5 had melting points that decreased with an increase in the degree of modification but had equivalent or deteriorated gas barrier properties, as compared with the unmodified EVOH of Reference Example. In contrast, for the modified EVOHs of Examples 1 to 6, although the melting points decreased with an increase in the degree of modification, the gas barrier properties under high humidity tended to be equivalent or improved, and both forming processability and the gas barrier properties under high humidity were achieved.

In addition, the modified EVOHs of Examples 1 to 6 had higher glass transition temperatures when dried than the modified EVOHs of Comparative Examples 1 to 5 when compared at the same degree of modification, and thus it was found that the cohesive force of the amorphous portion was less likely to decrease even when the modifying group was introduced. In general, a gas such as oxygen gas is considered to pass through an amorphous portion in the resin, and therefore, it is considered that a high cohesive force of the amorphous portion contributed to the improvement of the gas barrier property.

In addition, looking at Example 3 and Comparative Example 3, in both of which the degree of modification exceeded 5 mol%, it was found that Example 3 had an advantageous effect of the glass transition temperature when saturated with water being higher than that of Comparative Example 3 although the saturated water absorption of the monolayer film of EVOH with respect to the degree of modification was about the same. In general, when the degree of modification is increased, crystallinity decreases and the amorphousness increases, and the gas barrier properties under high humidity tend to be deteriorated. However, it is thought that the cohesive force of the amorphous portion of the present modified EVOH is less likely to decrease even when placed under high humidity, and as a result, the gas barrier properties under high humidity are improved.

It is generally known that it is difficult to use a hydrophilic film such as polyvinyl alcohol as a gas barrier material because when the film thereof is placed under high humidity, crystallinity decreases in line with the increase in the degree of modification, and the solubility in water increases. In contrast, the present modified EVOH has both structural unit (1) and the ethylene structural unit, and thus it was found that the present modified EVOH can be used as a gas barrier material even under high humidity, as hygroscopicity is suppressed and the cohesive force of the amorphous portion is less likely to decrease.

Specific embodiments of the present disclosure are described in the above Examples, but the above Examples are merely illustrative and are not to be construed as limiting. Various modifications apparent to those skilled in the art are intended to be within the scope of the present disclosure.

### Industrial Applicability

The present modified EVOH has excellent forming processability and gas barrier properties under high humidity, and thus, the present modified EVOH is useful as various packaging materials for various foods, seasonings such as mayonnaise and dressings, fermented foods such as miso, oil and/or fat foods such as salad oil, beverages, cosmetics, and pharmaceuticals.

## Claims

1. A modified ethylene-vinyl alcohol copolymer having a content of an ethylene structural unit of from 20 to 60 mol%, and comprising a structural unit (1): 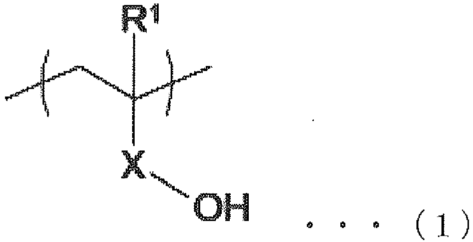 wherein in the structural unit (1), R¹ is an alkyl group having from one to three carbons; and X is an alkylene group having from one to five carbons.

2. The modified ethylene-vinyl alcohol copolymer according to claim 1, wherein a degree of modification of the structural unit (1) is from 0.5 to 10 mol%.

3. The modified ethylene-vinyl alcohol copolymer according to claim 1, wherein the modified ethylene-vinyl alcohol copolymer is water-insoluble.

4. The modified ethylene-vinyl alcohol copolymer according to claim 1, wherein a monolayer film formed of the modified ethylene-vinyl alcohol copolymer and having a film thickness of from 200 to 300 µm has a saturated water absorption of less than 15 mass% at 20°C and 90% RH.

5. A gas barrier material comprising a layer containing the modified ethylene-vinyl alcohol copolymer according to any one of claims 1 to 4.

6. A film or sheet comprising the gas barrier material according to claim 5.

7. A multilayer structure comprising the gas barrier material according to claim 5.

8. A packaging container comprising the gas barrier material according to claim 5.

9. A method for producing the modified ethylene-vinyl alcohol copolymer according to any one of claims 1 to 4, the method comprising:
copolymerizing ethylene, a vinyl ester monomer, and a compound having a structural unit (2) to produce a modified ethylene-vinyl ester copolymer; and
saponifying the produced modified ethylene-vinyl ester copolymer: 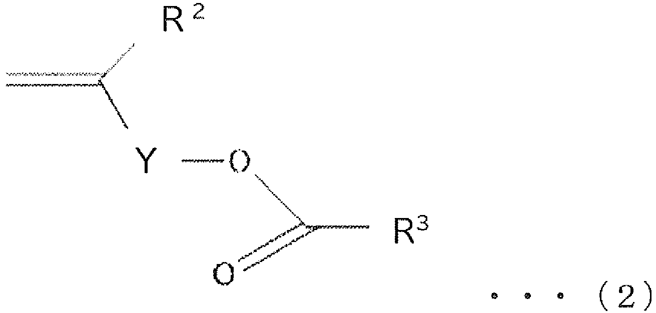
wherein in the structural unit (2), R² is an alkyl group having from one to three carbons; R³ is an alkyl group having from one to 10 carbons; and Y is an alkylene group having from one to five carbons.
